# EUROPEAN PATENT APPLICATION

(11) **EP 4 435 158 A1**
(43) Date of publication of application: **25.09.2024**
(21) Application number: 22894929.3
(22) Date of filing: 18.11.2022
(51) Int. Cl.: D01F 9/22, D01F 11/14

(54) **OILING AGENT FOR POLYACRYLONITRILE CARBON FIBER PRECURSORS AND PREPARATION METHOD THEREFOR**

(30) Priority: 18.11.2021 CN 202111369230
(71) Applicant: Zhongfu Shenying Carbon Fiber Co., Ltd., Jiangsu 222069 (CN)
(72) Inventor: ZHANG, Guoliang, Lianyungang Economic And Technological Development Zone Jiangsu 222069 (CN); GUO, Pengzong, Lianyungang Economic And Technological Development Zone Jiangsu 222069 (CN); ZHU, Weiwei, Lianyungang Economic And Technological Development Zone Jiangsu 222069 (CN); LIU, Lei, Lianyungang Economic And Technological Development Zone Jiangsu 222069 (CN); LIN, Kang, Lianyungang Economic And Technological Development Zone Jiangsu 222069 (CN)
(74) Representative: Lavoix
(86) International application number: PCT/CN2022/132708
(87) International publication number: WO 2023/088399

(57) **Abstract**

The present application discloses an oil agent for a polyacrylonitrile carbon fiber precursor, and a preparation method thereof. The oil agent comprises the following components in parts by weight: quaternary ammonium salt modified polyether silicone oil: 100 parts; epoxy-modified polydimethylsiloxane: 20 to 60 parts; a surfactant: 20 to 50 parts; and an organic solvent: 10 to 30 parts. The quaternary ammonium salt modified polyether silicone oil is introduced in the oil agent for a polyacrylonitrile carbon fiber precursor, and the quaternary ammonium group in the quaternary ammonium salt modified polyether silicone oil does not react with the epoxy group, which avoids thermal entanglement of fibers and roller-sticking problem caused by crosslinking reaction of the carbon fiber oil agent at high temperature, and improves the hydrophilicity of the oil agent, the adhesion of the oil agent to the fiber surface, and the antistatic performance. The introduction of the large-molecular-weight epoxy silicone oil improves the strand integrity, heat resistance, and anti-sticking performance of the fibers, solves the problem of roller-sticking during the drying procedure of carbon fiber precursor oil agent, reduces the occurrence of fiber filament breakage, and significantly improves the quality of the carbon fiber precursor.

## Description

The present application claims priority to Chinese Patent Application No. 202111369230.1 filed to the China National Intellectual Property Administration (CNIPA) on November 18, 2021 and entitled "OIL AGENT FOR POLYACRYLONITRILE CARBON FIBER PRECURSOR, AND PREPARATION METHOD THEREOF", which is incorporated herein by reference in its entirety.

### Technical Field

The present application relates to the technical field of preparation of high-performance carbon fibers, and in particular relates to an oil agent for a polyacrylonitrile carbon fiber precursor, and a preparation method thereof.

### Background

As an indispensable key additive in preparation of a carbon fiber (CF), the CF oil agent can prevent fiber monofilaments from sticking to each other or being entangled with each other and to reduce the friction and abrasion between the fiber surface and the roller, thereby avoiding defects on the fiber surface and improving the quality of carbon fibers. In the production process of polyacrylonitrile carbon fiber precursor, modified polydimethylsiloxane (commonly known as silicone oil) is often used as the main component of the oil agent, and the oil agent is obtained by compounding different functional groups modified silicone oil such as amino silicone oil, epoxy silicone oil and polyether silicone oil. However, the oil agents in the prior art face problems such as roller-sticking during production, poor heat resistance, too many broken filaments, and low carbon fiber strength.

### Summary

The present application is intended to provide an oil agent for a polyacrylonitrile carbon fiber precursor, and a preparation method thereof. Quaternary ammonium salt modified polyether silicone oil and large-molecular-weight epoxy silicone oil are introduced in the oil agent, and the quaternary ammonium group contained in the quaternary ammonium salt modified polyether silicone oil has no reactivity with an epoxy group, which avoids thermal entanglement of fibers and roller-sticking problem caused by crosslinking reaction of the carbon fiber oil agent at high temperature and significantly improves the quality of carbon fibers.

To achieve the above objective, the present application is implemented through the following technical solutions:
In a first aspect, the present application provides an oil agent for a polyacrylonitrile carbon fiber precursor, comprising the following components in parts by weight:
Quaternary ammonium salt modified polyether silicone oil: 100 parts; epoxy-modified polydimethylsiloxane (PDMS): 20 to 60 parts; a surfactant: 20 to 50 parts; and an organic solvent: 10 to 30 parts.

Experimental results have shown that the stability, heat resistance and bunching performance of the emulsion can be well guaranteed by controlling the above components in the above range, and the carbon fiber produced by the emulsion has less broken filaments and excellent tensile strength. Specifically, if the content of the epoxy-modified PDMS is too low, it will lead to a decrease in the heat resistance and strand integrity of the oil agent, an increase in filament size, and a decrease in fiber tensile strength; and if the content is too high, it will lead to excessive particle size, poor stability and easy stratification of the emulsion; ultimately, it will lead to poor fiber filaments, high ash content, and a decrease in fiber tensile strength. Excessive content of the surfactant can lead to a decrease in all aspects of fiber performance, including heat resistance, strand integrity, fiber strength, etc. Preferably, the oil agent for a polyacrylonitrile carbon fiber precursor comprises the following components in parts by weight: the quaternary ammonium salt modified polyether silicone oil 100 parts; the epoxy-modified PDMS 25 to 50 parts; the surfactant 40 to 50 parts; and the organic solvent 10 to 20 parts.

The quaternary ammonium salt modified polyether silicone oil of the present application is double-ended quaternary ammonium salt modified polyether silicone oil or single-ended quaternary ammonium salt modified polyether silicone oil; and the quaternary ammonium salt modified polyether silicone oil has a molecular weight of 5000 to 20000. Experimental results have shown that, if the molecular weight of the quaternary ammonium salt modified polyether silicone oil is too low, the viscosity of the oil agent after being oven-dried will be too low and easy to lose, and will cause the adhesion protective effect of the oil agent for fiber surface to decrease, and the filament will increase, resulting in a decrease in the tensile strength of the fiber. If a molecular weight of the quaternary ammonium salt modified polyether silicone oil is too high, the oil agent emulsion will have poor stability and a large particle size and will be easy to delaminate; and a too-high molecular weight of the quaternary ammonium salt modified polyether silicone oil may lead to too-strong fiber strand integrity, such that the process heat cannot be discharged in time to cause thermal entanglement of fibers and roller-sticking phenomenon, resulting in a decrease in fiber quality.

In the quaternary ammonium salt modified polyether silicone oil, a molar ratio of ethoxy (EO) units to propoxy (PO) units is (4-6):1.

Preferably, the molecular weight of the quaternary ammonium salt modified polyether silicone oil is 8000 to 15000; and in the quaternary ammonium salt modified polyether silicone oil, the molar ratio of EO units to PO units is 5:1.

In some specific embodiments of the present application, the molecular weight of the quaternary ammonium salt modified polyether silicone oil is 10770 to 14000; and in the quaternary ammonium salt modified polyether silicone oil, the molar ratio of EO units to PO units is 5:1.

The epoxy-modified PDMS in the present application is side-chain modified epoxy silicone oil or double-ended modified epoxy silicone oil. In the side-chain modified epoxy silicone oil, a molar ratio of main-chain structure (C₂H₆SiO) units to side-chain modified epoxy group (CH(O)CH₂) units is (80-150):1 and preferably (100-120):1. In the double-ended modified epoxy silicone oil, a molar ratio of main-chain structure (C₂H₆SiO) units to terminal epoxy group (CH(O)CH₂) units is (250-600):1 and preferably (300-500):1. The molecular weight of the epoxy-modified PDMS is 40000 to 100000. If the molecular weight of the epoxy-modified PDMS is too high, the emulsion will have poor stability and larger particle size and will be easily separated into layers. In addition, a too-high molecular weight of the epoxy-modified PDMS may lead to too-strong fiber strand integrity, such that the process heat cannot be discharged in time to cause thermal entanglement of fibers and roller-sticking phenomenon, resulting in a decrease in fiber quality. Preferably, the molecular weight of the epoxy-modified PDMS is 50000 to 80000.

In some specific embodiments of the present application, the epoxy-modified PDMS is side-chain modified epoxy silicone oil; in the side-chain modified epoxy silicone oil, the molar ratio of C₂H₆SiO units to CH(O)CH₂ units is 100:1; and the molecular weight of the side-chain modified epoxy silicone oil is 47200 to 96140.

In the oil agent for a polyacrylonitrile carbon fiber precursor of the present application, the surfactant is one or any of the mixture selected from the group consisting of a fatty alcohol polyoxyethylene ether, a fatty amine polyoxyethylene ether, a sorbitan fatty acid ester, and a polyoxyethylene sorbitan fatty acid ester. Preferably, the surfactant is a mixture of AEO-3 and AEO-9.

In the oil agent for a polyacrylonitrile carbon fiber precursor of the present application, the organic solvent is selected from the group consisting of isopropyl alcohol (IPA), N,N-dimethylformamide (DMF), ethylene glycol monobutyl ether, and dipropylene glycol methyl ether. In some specific embodiments of the present application, the organic solvent is IPA.

In a second aspect, the present application provides a preparation method of the oil agent for a polyacrylonitrile carbon fiber precursor, comprising the following step:
mixing and stirring the components according to a specified ratio, and adding water, conducting phase inversion emulsification, and adjusting a pH value to 4-6 to obtain a stable emulsion with a particle size of 150 nm to 500 nm. Preferably, the particle size of the emulsion is 150 nm to 300 nm.

Compared with the prior art, the present application has the following advantages:
In the oil agent for a polyacrylonitrile carbon fiber precursor of the present application, quaternary ammonium salt modified polyether silicone oil is introduced to improve the hydrophilicity of the oil agent, the adhesion of the oil agent to fiber surface, and the antistatic performance of the oil agent. In addition, the introduction of an appropriate large-molecular-weight epoxy silicone oil improves the strand integrity, heat resistance, and anti-sticking performance of fibers, further solves the problem of roller-sticking problem during the drying procedure of carbon fiber precursor oil agent, reduces the occurrence of fiber filament breakage. Further, the oil agent for a polyacrylonitrile carbon fiber precursor of the present application can enhance the protective effect for the fiber surface during pre-oxidation and carbonization processes, thereby effectively improving the quality of the carbon fiber precursor.

### Detailed Description of the Embodiments

The following will provide a clear and complete description of the technical solution of the present application in conjunction with the specific embodiments. Obviously, the described embodiments are merely some rather than all of the embodiments of the present disclosure. All other embodiments obtained by one skilled in the art based on the embodiments of the application without creative efforts should fall within the protection scope of the present application. What needs to be made clear is that, as long as there is no conflict, the embodiments in the present application and features in the embodiments can be arbitrarily combined with each other.

Some specific examples of components comprised in the oil agent for a polyacrylonitrile carbon fiber precursor of the present application are listed below.

### Example 1

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 10770 and comprises EO units and PO units that are in a molar ratio of about 5:1;
side-chain modified epoxy silicone oil: 25 parts, wherein the side-chain modified epoxy silicone oil has a molecular weight of about 47200, the molar ratio of main-chain structure (C₂H₆SiO) units to side-chain modified epoxy group (CH(O)CH₂) units is about 100:1;
a surfactant: fatty alcohol polyoxyethylene ether 40 parts, wherein the surfactant comprises 20 parts of AEO-3 and 20 parts of AEO-9; and
an organic solvent: IPA 10 parts.

After the components are mixed and stirred evenly, adding water to conduct phase inversion emulsification, and adjusting the pH value to 5 to obtain an emulsion that has a particle size of 213 nm and an optimal stability level. The prepared oil agent has a solid content of 30%, a heat resistance temperature of 430°C, and a residual weight of about 74%. A CF precursor prepared with the oil agent has an oil content of 0.82% and the precursor filament grade is 1 (the precursor filament grade is divided into grades 1 to 5, wherein grade 1 indicates the best and grade 5 indicates the worst). The tensile strength of the CF prepared from the CF precursor is 5143 MPa, the CF filament grade is 1.5 (the CF filament grade is divided into grades 1 to 5, wherein grade 1 indicates the best and grade 5 indicates the worst), and the ash content of the CF is 0.021%.

### Example 2

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 10770 and comprises EO units and PO units that are in a molar ratio of about 5:1;
side-chain modified epoxy silicone oil: 50 parts, wherein the side-chain modified epoxy silicone oil has a molecular weight of about 47200, the molar ratio of main-chain structure (C₂H₆SiO) units to side-chain modified epoxy group (CH(O)CH₂) units is about 100:1;
a surfactant: fatty alcohol polyoxyethylene ether 50 parts, wherein the surfactant comprises 25 parts of AEO-3 and 25 parts of AEO-9; and
an organic solvent: IPA 10 parts.

After the components are mixed and stirred evenly, adding water to conduct phase inversion emulsification, and adjusting the pH value to 5 to obtain an emulsion that has a particle size of 230 nm and a moderate stability grade. The prepared oil agent has a heat resistance temperature of 430°C and a residual weight of about 75%. The CF precursor prepared with the oil agent has an oil content of 0.81% and the precursor filament grade is 1. The tensile strength of the CF prepared from the CF precursor is 5334 MPa, the CF filament grade is 1.5, and the ash content of the CF is 0.031%. Compared with Example 1, it can be found that increasing the content of the epoxy-modified PDMS will increase the particle size, decrease the stability of the emulsion, and increase the ash content; the heat resistance and strand integrity of the oil agent are improved, and the fiber tensile strength is improved to a certain extent.

### Example 3

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 14000 and comprises EO units and PO units that are in a molar ratio of about 5:1;
side-chain modified epoxy silicone oil: 25 parts, wherein the side-chain modified epoxy silicone oil has a molecular weight of about 47200, the molar ratio of main-chain structure (C₂H₆SiO) units to side-chain modified epoxy group (CH(O)CH₂) units isabout 100:1;
a surfactant: fatty alcohol polyoxyethylene ether 40 parts, wherein the surfactant comprises 20 parts of AEO-3 and 20 parts of AEO-9; and
an organic solvent: IPA 10 parts.

After the components are mixed and stirred evenly, adding water to conduct phase inversion emulsification, and adjusting the pH value to 5 to obtain an emulsion that has a particle size of 224 nm and an optimal stability grade. The prepared oil agent has a heat resistance temperature of 430°C and a residual weight of about 74%. The CF precursor prepared with the oil agent has an oil content of 0.85% and the precursor filament grade is 1.5. The tensile strength of the CF prepared from the CF precursor is 5184 MPa, the CF filament grade is 2, and the ash content of the CF is 0.025%.

### Example 4

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 10770 and comprises EO units and PO units that are in a molar ratio of about 5:1;
side-chain modified epoxy silicone oil: 25 parts, wherein the side-chain modified epoxy silicone oil has a molecular weight of about 96140, the molar ratio of main-chain structure (C₂H₆SiO) units to side-chain modified epoxy group (CH(O)CH₂) units is about 100:1;
a surfactant: fatty alcohol polyoxyethylene ether 40 parts, wherein the surfactant comprises 20 parts of AEO-3 and 20 parts of AEO-9; and
an organic solvent: IPA 10 parts.

After the components are mixed and stirred evenly, adding water to conduct phase inversion emulsification, and adjusting the pH value to 5 to obtain an emulsion that has a particle size of 289 nm and a moderate stability grade. The prepared oil agent has a heat resistance temperature of 430°C and a residual weight of about 77%. The CF precursor prepared with the oil agent has an oil content of 0.76% and the precursor filament grade is 1. The tensile strength of the CF prepared from the CF precursor is 5256 MPa, the CF filament grade is 1.5, and the ash content of the CF is 0.029%. Compared with Example 1, it can be found that increasing the molecular weight of the epoxy-modified PDMS will increase the particle size, decrease the stability of the emulsion, and increase the ash content; and heat resistance of an oil agent is significantly improved.

### Example 5

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 10770 and comprises EO units and PO units that are in a molar ratio of about 5:1;
side-chain modified epoxy silicone oil: 25 parts, wherein the side-chain modified epoxy silicone oil has a molecular weight of about 96140, the molar ratio of main-chain structure (C₂H₆SiO) units to side-chain modified epoxy group (CH(O)CH₂) units is about 100:1;
a surfactant: fatty alcohol polyoxyethylene ether 50 parts, wherein the surfactant comprises 25 parts of AEO-3 and 25 parts of AEO-9; and
an organic solvent: IPA 20 parts.

After the components are mixed and stirred evenly, adding water to conduct phase inversion emulsification, and adjusting the pH value to 5 to obtain an emulsion that has a particle size of 262 nm and an optimal stability grade. The prepared oil agent has a heat resistance temperature of 430°C and a residual weight of about 77%. The CF precursor prepared with the oil agent has an oil content of 0.78% and the precursor filament grade is 1.5. The tensile strength of the CF prepared from the CF precursor is 5387 MPa, the CF filament grade is 2, and the ash content of the CF is 0.029%. Compared with Example 4, it can be found that increasing the contents of the surfactant and the organic solvent will decrease the particle size and increase the stability of the emulsion.

### Comparative Example 1

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 10770 and comprises EO units and PO units that are in a molar ratio of about 5:1;
side-chain modified epoxy silicone oil: 70 parts, wherein the side-chain modified epoxy silicone oil has a molecular weight of about 47200 and the molar ratio of main-chain structure (C₂H₆SiO) units to side-chain modified epoxy group (CH(O)CH₂) units is about 100:1;
a surfactant: fatty alcohol polyoxyethylene ether 40 parts, wherein the surfactant comprises 20 parts of AEO-3 and 20 parts of AEO-9; and
an organic solvent: IPA 10 parts.

After the components are mixed and stirred evenly, adding water to conduct phase inversion emulsification, and adjusting the pH value to 5 to obtain an emulsion that has a particle size of 624 nm and a low stability grade. The prepared oil agent has a heat resistance temperature of 430°C and a residual weight of about 78%. The CF precursor prepared with the oil agent has an oil content of 0.81% and the precursor filament grade is 3. The tensile strength of the CF prepared from the CF precursor is 4865 MPa, the CF filament grade is 4, and the ash content of the CF is 0.056%. Compared with Example 1, it can be found that, when the content of the epoxy-modified PDMS reaches 70 parts, the emulsion will have a particle size of more than 500 nm and poor stability, and is easy to delaminate, which will lead to poor fiber quality, high ash content, and a decrease in fiber tensile strength.

### Comparative Example 2

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 10770 and comprises EO units and PO units that are in a molar ratio of about 5:1;
side-chain modified epoxy silicone oil: 10 parts, wherein the side-chain modified epoxy silicone oil has a molecular weight of about 47200, the molar ratio of main-chain structure (C₂H₆SiO) units to side-chain modified epoxy group (CH(O)CH₂) units is about 100:1;
a surfactant: fatty alcohol polyoxyethylene ether 40 parts, wherein the surfactant comprises 20 parts of AEO-3 and 20 parts of AEO-9; and
an organic solvent: IPA 10 parts.

After the components are mixed and stirred evenly, adding water to conduct phase inversion emulsification, and adjusting the pH value to 5 to obtain an emulsion that has a particle size of 180 nm and an optimal stability grade. The prepared oil agent has a heat resistance temperature of 430°C and a residual weight of about 72%. The CF precursor prepared with the oil agent has an oil content of 0.79% and the precursor filament grade is 2.5. The tensile strength of the CF prepared from the CF precursor is 4923 MPa, the CF filament grade is 3.5, and the ash content of the CF is 0.017%. Compared with Example 1, it can be found that decreasing the content of the epoxy-modified PDMS will lead to a decreased particle size and improved stability of an emulsion; a decreased ash content, the heat resistance and strand integrity of the oil agent are reduced, and the filament is increased, resulting in a decrease in the tensile strength of the fiber.

### Comparative Example 3

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 10770 and comprises EO units and PO units that are in a molar ratio of about 5:1;
side-chain modified epoxy silicone oil: 25 parts, wherein the side-chain modified epoxy silicone oil has a molecular weight of about 47200, the molar ratio of main-chain structure (C₂H₆SiO) units to side-chain modified epoxy group (CH(O)CH₂) units is about 100:1;
a surfactant: fatty alcohol polyoxyethylene ether 60 parts, wherein the surfactant comprises 20 parts of AEO-3 and 20 parts of AEO-9; and
an organic solvent: IPA 10 parts.

After the components are mixed and stirred evenly, adding water to conduct phase inversion emulsification, and adjusting the pH value to 5 to obtain an emulsion that has a particle size of 167 nm and an optimal stability grade. The prepared oil agent has a heat resistance temperature of 430°C and a residual weight of about 71%. The CF precursor prepared with the oil agent has an oil content of 0.83% and the precursor filament grade is 3. The tensile strength of the CF prepared from the CF precursor is 4812 MPa, the CF filament grade is 4, and the ash content is 0.017%. Results show that a too-high content of the surfactant will lead to a decrease in various properties of the fibers, comprising heat resistance, bunching performance, and strength.

### Comparative Example 4

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 4000 and comprises EO units and PO units that are in a molar ratio of about 5:1;
side-chain modified epoxy silicone oil: 25 parts, wherein the side-chain modified epoxy silicone oil has a molecular weight of about 47200, the molar ratio of main-chain structure (C₂H₆SiO) units to side-chain modified epoxy group (CH(O)CH₂) units is about 100:1;
a surfactant: fatty alcohol polyoxyethylene ether 40 parts, wherein the surfactant comprises 20 parts of AEO-3 and 20 parts of AEO-9; and
an organic solvent: IPA 5 parts.

After the components are mixed and stirred evenly, adding water to conduct phase inversion emulsification, and adjusting the pH value to 5 to obtain an emulsion that has a particle size of 191 nm and an optimal stability grade. The prepared oil agent has a heat resistance temperature of 430°C and a residual weight of about 72%. The CF precursor prepared with the oil agent has an oil content of 0.75% and the precursor filament grade is 3. The tensile strength of the CF prepared from the CF precursor is 4723 MPa, the CF filament grade is 4, and the ash content of the CF is 0.016%. Compared with Example 1, it can be found that quaternary ammonium salt modified polyether silicone oil with a decreased molecular weight may have a too-low viscosity after being oven-dried and is easy to lose, such that the adhesion protective effect of the oil agent for the fiber surface decreases, and the filament increases, resulting in a decrease in fiber tensile strength.

### Comparative Example 5

An oil agent for a polyacrylonitrile carbon fiber precursor is provided, comprising the following components in parts by weight:
double-ended quaternary ammonium salt modified polyether silicone oil: 100 parts, wherein the double-ended quaternary ammonium salt modified polyether silicone oil has a molecular weight of about 24330 and comprises EO units and PO units that are in a molar ratio of about 5:1;
side-chain modified epoxy silicone oil: 25 parts, wherein the side-chain modified epoxy silicone oil has a molecular weight of about 156800, the molar ratio of main-chain structure (C₂H₆SiO) units to side-chain modified epoxy group (CH(O)CH₂) units is about 100:1;
a surfactant: fatty alcohol polyoxyethylene ether 50 parts, wherein the surfactant comprises 20 parts of AEO-3 and 20 parts of AEO-9; and
an organic solvent: IPA 10 parts.

After the components are mixed and stirred evenly, adding water to conduct phase inversion emulsification, and adjusting the pH value to 5 to obtain an emulsion that has a particle size of 776 nm and a low stability grade. The prepared oil agent has a heat resistance temperature of 430°C and a residual weight of about 81%. The CF precursor prepared with the oil agent has an oil content of 0.63% and the precursor filament grade is 4. The tensile strength of the CF prepared from the CF precursor is 4780 MPa, the CF filament grade is 5, and the ash content of the CF is 0.089%. It can be seen from the comparison of the above examples that, when using high molecular weight quaternary ammonium salt modified polyether silicone oil and epoxy modified polydimethylsiloxane, the emulsion stability will become worse, the particle size will become larger, and it is easy to delaminate, and too-high molecular weight may lead to too strong fiber strand integrity, and the heat of the process cannot be discharged in time to cause thermal entanglement of fibers and roller-sticking phenomenon, resulting a decrease in fibers quality.

Specific examples of the formula of the oil agent for a polyacrylonitrile carbon fiber precursor in the present application may also be shown in Table 1.

In Examples 6 to 8, the quaternary ammonium salt modified polyether silicone oil is single-ended quaternary ammonium salt modified polyether silicone oil; the epoxy-modified PDMS is double-ended modified epoxy silicone oil; the surfactant is fatty amine polyoxyethylene ether; and the organic solvent is ethylene glycol monobutyl ether or dipropylene glycol methyl ether.

In Examples 9 to 10, the quaternary ammonium salt modified polyether silicone oil is double-ended quaternary ammonium salt modified polyether silicone oil; the epoxy-modified PDMS is side-chain modified epoxy silicone oil; the surfactant is a polyoxyethylene sorbitan fatty acid ester; and the organic solvent is IPA.

In Examples 11 to 12, the quaternary ammonium salt modified polyether silicone oil is single-ended quaternary ammonium salt modified polyether silicone oil; the epoxy-modified PDMS is side-chain modified epoxy silicone oil; the surfactant is a polyoxyethylene sorbitan fatty acid ester; and the organic solvent is IPA.

**Table 1 Oil formula data for each example**

| Component | Example 6 | Example 7 | Example 8 | Example 9 | Example 10 | Example 11 | Example 12 |
|---|---|---|---|---|---|---|---|
| Quaternary ammonium salt modified polyether silicone oil (molecular weight) | 100 (10770) | 100 (10770) | 100 (10770) | 100 (10770) | 100 (10770) | 100 (8000) | 100 (10770) |
| Epoxy-modified PDMS (molecular weight) | 25 (47200) | 50 (47200) | 25 (47200) | 25 (96140) | 25 (96140) | 60 (47200) | 20 (96140) |
| Surfactant | 20 | 50 | 40 | 30 | 50 | 30 | 20 |
| Organic solvent | 10 | 20 | 10 | 10 | 20 | 30 | 10 |

Table 2 shows the performance data of carbon fibers produced with the oil agents in the examples and comparative examples. In Comparative Example 6, the oil agent in the prior art is adopted, and its formula is as follows:
side-chain amino-modified silicone oil: 100 parts, wherein the side-chain amino-modified silicone oil has a molecular weight of about 11000 and an ammonium value of about 0.50 mmol/g;
side-chain modified epoxy silicone oil: 25 parts, wherein the side-chain modified epoxy silicone oil has a molecular weight of about 23000 and an epoxy value of 0.30 mmol/g;
a surfactant: fatty alcohol polyoxyethylene ether 50 parts, wherein the surfactant comprises 20 parts of AEO-3 and 20 parts of AEO-9; and
an organic solvent: IPA 10 parts.

After the above components are mixed and stirred evenly, adding water to conduct phase inversion emulsification, and adjusting the pH value to 5 to obtain an emulsion that has a particle size of 175 nm and an optimal stability grade. The prepared oil agent has a heat resistance temperature of 430°C and a residual weight of about 62%. The CF precursor prepared with the oil agent has an oil content of 0.86% and the precursor filament grade is 4. The tensile strength of the CF prepared from the CF precursor is 4609 MPa, the CF filament grade is 5, and the ash content of the CF is 0.067%. It can be seen from comparison of the above examples that the use of the side-chain amino-modified silicone oil and modified epoxy silicone oil will decrease the heat resistance of an oil agent; and the amino-modified silicone oil will be crosslinked with the epoxy silicone oil under heat to cause roller-sticking problem, resulting in fiber surface damage, increased broken filaments, and decreased tensile performance of fibers.

**Table 2 Property data of carbon fibers produced with the oil agents in the examples and comparative examples**

| Index | Example 1 | Example 2 | Example 3 | Example 4 | Example 5 | Example 6 | Example 7 | Example 8 | Example 9 | Example 10 |
|---|---|---|---|---|---|---|---|---|---|---|
| Particle size of an | 213 | 230 | 224 | 289 | 262 | 228 | 233 | 227 | 246 | 261 |
| emulsion, nm | | | | | | | | | | |
| Stability of an emulsion | Opti mal | Mode rate | Opti mal | Moderat e | Optim al | Moderat e | Optim al | Optimal | Moderat e | Moderat e |
| Residual rate at 430°C, % | 74 | 75 | 74 | 77 | 77 | 76 | 75 | 77 | 74 | 73 |
| Oil content, % | 0.82 | 0.81 | 0.85 | 0.76 | 0.78 | 0.81 | 0.82 | 0.80 | 0.77 | 0.76 |
| Broken filament content grade of a precursor | 1 | 1 | 1.5 | 1 | 1.5 | 1.5 | 1.5 | 1 | 1 | 1 |
| Strength of a CF, MPa | 5143 | 5334 | 5184 | 5256 | 5387 | 5156 | 5273 | 5166 | 5245 | 5356 |
| Broken filament content grade of a CF | 1.5 | 1.5 | 2 | 1.5 | 2 | 2 | 1.5 | 2 | 2 | 1.5 |
| Ash content, % | 0.021 | 0.031 | 0.025 | 0.029 | 0.029 | 0.026 | 0.030 | 0.029 | 0.023 | 0.025 |

**Table 2 (continued) Property data of carbon fibers produced with the oil agents in the examples and comparative examples**

| Index | Example 11 | Example 12 | Compara -tive Example 1 | Compara -tive Example 2 | Compara -tive Example 3 | Compara -tive Example 4 | Compara -tive Example 5 | Compara -tive Example 6 |
|---|---|---|---|---|---|---|---|---|
| Particle size of an emulsion, nm | 213 | 247 | 624 | 180 | 167 | 191 | 776 | 175 |
| Stability of an emulsion | Optimal | Moderate | Poor | Optimal | Optimal | Optimal | Poor | Optimal |
| Residual rate at 430°C, % | 74 | 75 | 78 | 72 | 71 | 72 | 81 | 62 |
| Oil content, % | 0.82 | 0.81 | 0.81 | 0.79 | 0.83 | 0.75 | 0.63 | 0.86 |
| Broken filament content grade of precursor | 1 | 1 | 3 | 2.5 | 3 | 3 | 4 | 4 |
| Strength of CF, MPa | 5123 | 5334 | 4865 | 4923 | 4812 | 4723 | 4780 | 4609 |
| Broken filament content grade of CF | 2 | 1.5 | 4 | 3.5 | 4 | 4 | 5 | 5 |
| Ash content, % | 0.022 | 0.026 | 0.056 | 0.017 | 0.017 | 0.016 | 0.089 | 0.067 |

In summary, the quaternary ammonium salt modified polyether silicone oil is introduced in the oil agent for a polyacrylonitrile carbon fiber precursor of the present application, and the quaternary ammonium group in the quaternary ammonium salt modified polyether silicone oil does not react with the epoxy group, which avoids thermal entanglement of fibers and roller-sticking problem caused by crosslinking reaction of the carbon fiber oil agent at high temperature, and can also improve the hydrophilicity of the oil agent, the adhesion of the oil agent to the fiber surface, and the antistatic performance of the oil agent. The introduction of an appropriate large-molecular-weight epoxy silicone oil improves the strand integrity, heat resistance, and anti-sticking performance of carbon fibers, further solves the problem of roller-sticking during the drying procedure of carbon fiber precursor oil agent, reduces the occurrence of fiber filament breakage. and significantly improves the quality of the carbon fiber precursor. The oil agent for a polyacrylonitrile carbon fiber precursor of the present application is of great significance for improvement of the quality of the CF precursor and enhancement of the protective effect of an oil agent for a fiber surface during pre-oxidation and carbonization processes.

It should be noted that, in this text, the terms "comprise/comprising", "contain/containing" and any other variants thereof are non-exclusive, so that any process, method, object or device containing a series of elements contains not only such factors, but also other factors not listed clearly, or further contains inherent factors of the process, method, object or device. Without further restrictions, a factor defined by the statement "comprises/comprising an/a ...", "contain/containing an/a ..." or any other variants thereof does not exclude other identical factors in the process, method, object or device including said factors.

It should be noted that the foregoing embodiments are provided only for describing instead of limiting the technical solutions of the present disclosure. While particular embodiments of the disclosure have been shown and described, it will be obvious to one skilled in the art that modifications can be made to the technical solutions embodied by all the aforementioned embodiments, or that equivalent replacements can be made to some of the technical features embodied by all the aforementioned embodiments, without departing from the spirit and scope of the technical solutions of the present disclosure.

### Industrial applicability

The oil agent for polyacrylonitrile carbon fiber precursor provided in the present application introduces quaternary ammonium salt modified polyether silicone oil and large-molecular-weight epoxy silicone oil, and the quaternary ammonium group does not react with the epoxy group, which avoids thermal entanglement of fibers and roller-sticking problem caused by crosslinking reaction of the carbon fiber oil agent at a high temperature and significantly improves the quality of carbon fibers.

## Claims

1. An oil agent for a polyacrylonitrile carbon fiber precursor, comprising the following components in parts by weight:
quaternary ammonium salt modified polyether silicone oil: 100 parts; epoxy-modified polydimethylsiloxane: 20 to 60 parts; a surfactant: 20 to 50 parts; and an organic solvent: 10 to 30 parts.

2. The oil agent for a polyacrylonitrile carbon fiber precursor according to claim 1, comprising the following components in parts by weight: the quaternary ammonium salt modified polyether silicone oil: 100 parts; the epoxy-modified polydimethylsiloxane: 25 to 50 parts; the surfactant: 40 to 50 parts; and the organic solvent: 10 to 20 parts.

3. The oil agent for a polyacrylonitrile carbon fiber precursor according to claim 1, wherein the quaternary ammonium salt modified polyether silicone oil is double-ended quaternary ammonium salt modified polyether silicone oil or single-ended quaternary ammonium salt modified polyether silicone oil; wherein a molar ratio of ethoxy units to propoxy units is (4-6):1; and the molecular weight of the quaternary ammonium salt modified polyether silicone oil is 5000 to 20000.

4. The oil agent for a polyacrylonitrile carbon fiber precursor according to claim 1, wherein in the quaternary ammonium salt modified polyether silicone oil, a molar ratio of ethoxy units to propoxy units is 5:1; and the molecular weight of the quaternary ammonium salt modified polyether silicone oil is 8000 to 15000.

5. The oil agent for a polyacrylonitrile carbon fiber precursor according to claim 1, wherein in the quaternary ammonium salt modified polyether silicone oil, a molar ratio of ethoxy units to propoxy units is 5:1; and the molecular weight of the quaternary ammonium salt modified polyether silicone oil is 10770 to 14000.

6. The oil agent for a polyacrylonitrile carbon fiber precursor according to claim 1, wherein the epoxy-modified polydimethylsiloxane is side-chain modified epoxy silicone oil or double-ended modified epoxy silicone oil.

7. The oil agent for a polyacrylonitrile carbon fiber precursor according to claim 1, wherein the surfactant is one or any of the mixture selected from the group consisting of a fatty alcohol polyoxyethylene ether, a fatty amine polyoxyethylene ether, a sorbitan fatty acid ester, and a polyoxyethylene sorbitan fatty acid ester.

8. The oil agent for a polyacrylonitrile carbon fiber precursor according to claim 1, wherein the organic solvent is selected from the group consisting of isopropyl alcohol, N,N-dimethylformamide, ethylene glycol monobutyl ether, and dipropylene glycol methyl ether.

9. A preparation method of the oil agent for a polyacrylonitrile carbon fiber precursor according to any one of claims 1 to 8, specifically comprising the following step:
mixing and stirring the components according to a specified ratio, and adding water, conducting phase inversion emulsification, and adjusting pH to 4-6 to obtain an emulsion, which is the oil agent for a polyacrylonitrile carbon fiber precursor.

10. The preparation method of the oil agent for a polyacrylonitrile carbon fiber precursor according to claim 9, wherein the particle size of the emulsion is 150 nm to 500 nm.
